# EUROPÄISCHE PATENTSCHRIFT

(11) **EP 1 044 363 B1**
(45) Veröffentlichungstag und Bekanntmachung des Hinweises auf die Patenterteilung: **20.10.2004**
(21) Anmeldenummer: 99941402.2
(22) Anmeldetag: 29.06.1999
(51) Int. Cl.: G01N 21/77, G02B 6/42

(54) **OPTOELEKTRONISCHER GASSENSOR AUF DER BASIS VON OPTODEN**
OPTOELECTRONIC GAS SENSOR BASED ON OPTODES
DETECTEUR DE GAZ OPTOELECTRONIQUE A BASE D'OPTODES

(30) Priorität: 07.08.1998 DE 19835769
(43) Veröffentlichungstag der Anmeldung: 18.10.2000
(73) Patentinhaber: ROBERT BOSCH GMBH, 70442 Stuttgart (DE)
(72) Erfinder: SCHNEIDER, Joachim, D-82008 Unterhaching (DE); PFEFFERSEDER, Anton, D-82054 Sauerlach-Arget (DE); HENSEL, Andreas, D-71665 Vaihingen (DE); OPPELT, Ulrich, D-85604 Zorneding (DE)
(86) Internationale Anmeldenummer: PCT/DE1999/001884
(87) Internationale Veröffentlichungsnummer: WO 2000/008447

(56) Entgegenhaltungen:
- EP-A- 0 834 735
- US-A- 4 755 667
- US-A- 4 872 759
- US-A- 5 177 352
- US-A- 5 442 169
- US-A- 5 737 457
- US-A- 5 822 473

## Beschreibung

### Stand der Technik

Die Erfindung betrifft einen optoelektronischen Gassensor auf der Basis von Optoden gemäß dem Oberbegriff der unabhängigen Ansprüche 1 und 2 und außerdem ein elektronisches Bauteil zur Herstellung eines solchen optoelektronischen Gassensors.

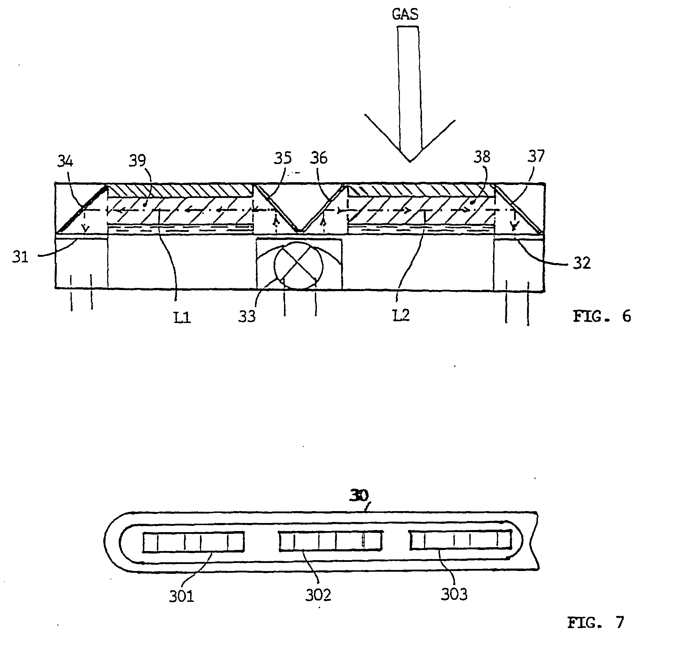

Ein optoelektronischer Gassensor ist in einem Fachartikel "A field hardened optical waveguide hybrid integrated-circuit, multi-sensor chemical probe and its chemistry" von Richard J. Polina et al. in SPIE Vol. 3105, auf den Seiten 71-78 beschrieben: Dieser bekannte auf Optodenbasis arbeitende Gassensor ist in Fig. 6 schematisch dargestellt, und seine Eigenschaften werden im folgenden kurz beschrieben:

Von einer LED 33 wird in vertikaler Richtung ein Lichtbündel durch zwei Spiegel 35, 36 in zwei Teile L1, L2 geteilt und in Lateralrichtung reflektiert und gelangt dadurch jeweils in eine aus Optodenmaterial bestehende Meßstrecke 38 und eine Referenzstrecke 39. Der durch die Optodenstrecke 38 gegangene Lichtstrahl L2 wird wiederum an einer Spiegelfäche 37 in vertikaler Richtung nach unten reflektiert und gelangt auf die lichtempfindliche Fläche einer'ersten Photodiode 31, während der durch die Referenzstrecke 39 geleitete Lichtstrahl L1 an einer weiteren Spiegelfläche 34 vertikal nach unten auf die lichtempfindliche Fläche einer weiteren Photodiode 31 gespiegelt wird. Die Optodenstrecke 38 und die Referenzstrecke 39, die Spiegelflächen 34-37 und die Photodioden 31 und 32 liegen symmetrisch um die mittig angeordnete LED 33. Das Optodenmaterial der Meßstrecke 38 liegt gegenüber dem zu messenden Gas (Pfeil frei, wobei dieses Gas durch eine im (nicht gezeigten) Chip-Gehäuse vorgesehene Öffnung Zutritt hat.

Die Fig. 7 zeigt schematisch einen mit drei hintereinanderliegenden Sensoreinheiten 301, 302 und 303 gemäß Fig. 6 bestückten Gasmeßfühler 30.

Bedingt durch die Art der Einkopplung und Reflexion der Lichtbündel L1 und L2 und die Spiegelflächen 34-37, zuerst von der vertikalen in die laterale Richtung und dann von der lateralen wieder in die vertikale Richtung, ist der in Fig. 6 gezeigte und in dem oben zitierten Fachartikel beschriebene bekannte Gassensorchip relativ lang und breit (z.B. 3 cm lang und 0,35 cm breit), so daß ein unter Verwendung von mehreren hintereinander aufgereihten Gassensorchips 301-303 aufgebauter Gasmeßfühter 30 gemäß Fig. 7 sehr lang ausfällt. Außerdem ist ein solcher bekannter Gassensorchip und der damit realisierte Gasmeßfühler 30 relativ teuer. Ferner können unterschiedliche Alterungserscheinungen an den separaten Chips 301-303 zu unerwünschten Meßfehlern führen.

US-A-5 737457 (Figs. 1-2) offenbart ein Optoelektronischer Gassensor mit einer mittig angeordneten Lichtquelle (14, 68, 90,92,94), einem Lichtempfänger (16, 18), und einem gasempfindlichen Wellenleiter 22, wobei die Lichtquelle 14 und der Lichtempfänger IN einem Substrat angeordnet sind. Über Schrägflächen 28-32 wird das vertikal emittiere Licht umgelenkt, auf einen horizontalen Pfad durch den Wellenleiter geschickt und durch eine weitere Umlenkung vertikal auf den Empfängern gebracht. Gemäß Sp. 3, Z. 11-13 sind die Quelle 14 und Empfänger 16, 18 in jedoch nicht auf dem Substrat angeordnet.

US-A-5 442169 (Figs. 3b, 4b) offenbart einen optoelektronischer Gassensor, wobei Licht von einer Quelle 10 seitlich in einen Lichtwellentleiter 2 emittiert wird, dessen Brechungsindex durch einen Gasstrom 50, derart geändert wird, daß das Licht auf unterschiedliche Empfängerelemente auffällt (über Gitter 7) - die Signale werden von einem Prozessor 80 ausgewertet. Der seitliche Emissionsbereich des Lichtsenders 10 stößt lateral an das Optodenmaterials 2.

US-A-5 177352 (Figs. 2A, 3) offenbart einen integrierten optischen Originalitätssicherungssenor mit einem Lichtwellenleiter 16, einer Lichtquelle 16, einer Mehrzahl von zentralsymmetrisch angeordneten Photodetektoren 14, und ohmischen Kontakten 42 (oben) und 44 (unten). Während eines Einbruchsversuchs werden absorbierenden Teilchen auf der Oberfläche des Wellenleiters derart gestört, daß eine Signaländerung hervorgerufen wird.

### Aufgaben und Vorteile der Erfindung.

Angesichts des oben aufgezeigten Standes der Technik ist es Aufgabe der Erfindung einen verbesserten optoelektronischen Gassensor auf Optodenbasis so zu ermöglichen, daß er preiswerter und in seinen Abmessungen wesentlich kleiner ist, und daß auch ein elektronisches Bauteil, dem die erfindungsgemäßen Prinzipien zugrunde liegen, zur Herstellung eines optoelektronischen Gassensors derart bereitgestellt werden kann, das es ohne zusätzliche optische Komponenten wie z.B Spiegel und Prismen auskommt.

Diese Aufgabe wird gemäß einem ersten wesentlichen Aspekt der Erfindung dadurch gelöst daß ein optoelektronischer Gassensor auf der Basis von Optoden bereitgestellt wird, bei dem in oder auf einem Halbleitersubstrat mehrere voneinander getrennte lichtempfindliche Elemente und ein mittig dazwischen liegender Lichtsender integriert sind, der dadurch gekennzeichnet ist, daß die lichtempfindlichen Elemente im Substrat in einer Ebene liegen und zusammen mit einem Licht in lateraler Richtung aussendenden seitlichen Emissionsbereich des Lichtsenders von Abschnitten des Optodenmaterials bedeckt sind, dessen Dicke und Brechungsindex so gewählt sind, daß das aus dem Emissionsbereich lateral-austretende Licht durch Totalreflexion in dem Optodenmaterial in jedem Transmissionszweig zu den lichtempfindlichen Elementen geführt wird.

Gemäß einem zweiten wesentliche Aspekt der Erfindung ist ein die obige Aufgabe lösender optoelektronischer Gassensor auf der Basis von Optoden bereitgestellt, bei dem in oder auf einem Halbleitersubstrat mehrere voneinander getrennte lichtempfindliche Elemente und ein mittig dazwischen liegender Lichtsender integriert sind, der dadurch gekennzeichnet ist, daß die lichtempfindlichen Elementen im Substrat in einer Ebene liegen und jeweils von einem Abschnitt des Optodenmaterials bedeckt sind, der Lichtsender durch einen Ringspalt gegenüber den Abschnitten des Optodenmaterials beabstandet ist und die Dicke des Optodenmaterials sehr viel geringer als die Höhe des Lichtsenders ist, so daß das vom Lichtsender emittierte Licht in die Luft abgestrahlt und dann direkt oder, nachdem es an den Innenwänden eines den Gassensorchip umgebenden Gehäuses reflektiert wurde, durch das Optodenmaterial jeweils in die lichtempfindlichen Elemente eintritt.

Bevorzugt bildet eines der lichtempfindlichen Elemente und die es bedeckende Schicht eine Referenzstrecke. Das Optodenmaterial der Meßstrecken besteht aus einem gassensitiven Polymer-Trägermaterial, dem mindestens eine Indikatorsubstanz aus der Gruppe von Verbindungen bestehend aus:

Azobenzole, Acetophenone, Corrine, Porphyrine, Phthalocyanine, Macrolide, Porphyrinogene, Nonactin, Valinomycin und/oder deren Komplexe mit Übergangsmetallen der I.-II und der V.-VIII Nebengruppe. zugegeben ist. Dagegen besteht die die Referenzstrecke bedeckende Schicht bevorzugt aus einem Polymer-Trägermaterial, dem keine Indikatorsubstanz zugegeben ist.

In einem bevorzugten Layout können die lichtempfindlichen Elemente des optoelektronischen Gassensors mit den sie bedeckenden Abschnitten des Optodenmaterials bzw. mit der die Referenzstrecke bedeckenden Polymer-Trägermaterialschicht sektorartig zentralsymmetrisch um den Lichtsender angeordnet sein. Zum Beispiel können auf diese Weise vier symmetrische Transmissionszweige gebildet werden, die drei Sensorstrecken und die eine Referenzstrecke einschließen.

Der den optoelektronischen Gassensor bildende Chip kann quadratisch, fünf-, sechs-, sieben- oder achteckig oder auch kreisrund ausgeführt sein. Selbstverständlich kann ein solcher optoelektronischer Gassensor auch weniger oder mehr als vier Transmissionszweige beinhalten.

Bei einem gemäß dem ersten Aspekt realisierten optoelektronischen Gassensor sind die einzelnen Transmissionszweige durch Barrieren getrennt, so daß sich die einzelnen Transmissionszweige durch aus dem Optodenmaterial austretendes Streulicht optisch nicht beeinflussen. Die Höhe dieser Barrieren kann etwa gleich der Höhe des zentralen Lichtsensors gewählt werden. Außerdem können alle Stellen des Chips, die nicht lichtempfindlich sind, falls erforderlich verspiegelt werden, so auch die Seitenwände der Barrieren.

Bevorzugt besteht das Substrat des Chips aus n-leitendem Silizium, und die lichtempfindlichen Elemente sind aus in das n-Siliziumsubstrat integrierten p-Silizium-Bereichen gebildet. Auf diese Weise bilden die lichtempfindlichen Elemente Photodioden. Der Lichtsender ist bevorzugt eine LED, es können zur Abgrenzung der Wellenlänge aber auch mehrere LED's aufgebracht werden.

Bevorzugt liegt die Dicke des Optodenmaterials über den lichtempfindlichen Elementen bei 200 µm bis 300 µm und bevorzugt im Bereich von 220 µm bis 260 µm.

Bei einem gemäß dem zweiten wesentlichen Aspekt der Erfindung realisierten optoelektronischen Gassensor ist die Dicke des Optodenmaterials sehr viel geringer als die Höhe der LED und beträgt etwa 5 µm bis 20 µm, bevorzugt 5 µm bis 10 µm, während die Höhe des Lichtsenders (LED) sehr viel größer ist und etwa 300 µm betragen kann.

Zur Herstellung eines optoelektronischen Gassensors kann ein dafür vorgesehenes elektronisches Bauteils so gestaltet sein; daß in oder auf einem Halbleitersubstrat mehrere voneinander getrennte lichtempfindliche Elemente sektorartig zentralsymmetrisch unter Einhaltung eines bestimmten gegenseitigen Abstands integriert sind, daß eine dünne dielektrische Isolationsschicht über dem gesamten lichtempfindlichen Halbleiterbereichen liegt, daß Kontaktöffnungen an definierten peripheren Stellen der lichtempfindlichen Halbleiterelemente mit Kontaktierungen zu den lichtempfindlichen Halbleiterelementen versehen sind, und daß in den Abstandsbereichen zwischen den lichtempfindlichen Elementen Metallisierungsstreifen zu einem zentralen Anschlußpad zum Anschluß der als Lichtsender dienenden LED geführt sind.

Auf diese Weise können in dem elektronischen Bauteil, das sich zur Herstellung eines optoelektronischen Gassensors eignet, vier gleich große Photodioden mit einer durch das Substrat gebildeten gemeinsamen Kathode und einer Fläche der einzelnen lichtempfindlichen Bereiche von jeweils 0,8 bis 1 mm² in einem Chip mit einer Kantenlänge im Bereich von etwa 200 µm bis 300 µm integriert werden, wobei die gesamte Chiphöhe etwa 400 µm bis 500 µm beträgt.

Für den praktischen Einsatz wird der Chip des optoelektronischen Gassensors in einem Gehäuse (vorzugsweise SMD) montiert und durch einen Deckel geschützt. Dieser Deckel weist Ober den Stellen, die mit gassensitivem Material beschichtet sind, Öffnungen auf, so daß Gas eindringen kann.

Im Hinblick auf eine gute Verarbeitbarkeit ist es möglich, den Gehäusedeckel vor dem Aufbringen der gassensitiven Materialien auf einer Leiterplatte zu befestigen und das den späteren optoelektronischen Gassensor bildende elektronische Bauteil unbeschichtet in eine entsprechende elektronische Schaltung einzulöten. Auf diese Weise können die gassensitiven Materialien durch die beim Lötvorgang entstehenden Hitze nicht zerstört oder nachteilig verändert werden. Die Öffnungen im Gehäusedeckel, durch die anschließend die Beschichtung erfolgt bzw. beim späteren Einsatz das Gas eintritt, können beim Lötvorgang z.B. mit einer Klebefolie verschlossen werden, um das Eindringen von Flußmitteln zu verhindern.

Die Erfindung bietet gegenüber dem bekannten optoelektronischen auf Optodenbasis beruhenden Gassensor insbesondere folgende Vorteile:
- Aufgrund der Integration aller Funktionseinheiten des Sensors (d.h. die elektronischen Bauteile und die Optodenbahnen auf einem Siliziumchip) weist der Sensor äußerst geringe geometrische Abmessungen auf.
- Aufgrund des geringen Abstandes zwischen dem Lichtsender (LED) und den lichtempfindlichen Elementen (Photodioden) können gemäß dem ersten wesentlichen Aspekt der Erfindung die Optodenstrecken, d.h. das gassensitive Polymer sowie die Referenzstrecke, die Aufgabe der sonst erforderlichen passiven Optik, wie z.B. Prismen oder Spiegel beim Führen des Lichts vom Lichtsender zur Optode und von der Optode zur Photodiode mit übernehmen. Dabei bleibt gewährleistet, daß die das Gas umgebende Atmosphäre auf eine große Oberfläche der Optode einwirken kann.
- Der geringe Abstand zwischen LED und Photodiode bewirkt eine hohe Effektivität beim Überkoppeln des Lichts zwischen diesen beiden Bauteilen. Dies bedeutet einen geringen Leistungsbedarf.
- Die angepaßte Abstrahicharakteristik der LED in lateraler Richtung, die durch eine Verspiegelung der Ober- und Unterseite derselben erreicht ist, verstärkt diese Effekt.
- Durch das direkte Überkoppeln des Lichts von der LED in die Optodenstrecken und die Referenzstrecke und von dort in die Photodioden treten äußerst geringe Koppelverluste auf, d.h. daß keine zusätzliche passive Optik notwendig ist.
- Die Barrieren gewährleisten ein geringes Nebensprechen.
- Der Referenz- und die Meßzweige weisen eine hohe Symmetrie auf, da die Photodioden monolithisch integriert sind.
- Der gemäß dem zweiten wesentlichen Aspekt der Erfindung realisierte optoelektronische Gassensor hat gegenüber dem oben Gesagten außerdem den Vorteil, daß die Optodenschicht und die Schicht der Referenzstrecke wesentlich dünner ausfallen können. Diese Schichten haben eine Dicke von etwa 5-10 µm. Sie wirken nicht vorrangig als Lichtleiter, da das Licht zunächst von der LED in die Luft abgestrahlt wird und dann direkt oder nachdem es vom umgebenden Gehäuse reflektiert wurde, durch die Optodenschichten bzw. Referenzschicht auf die Photodioden trifft. Dabei kommt den Barrieren nur eine untergeordnete Bedeutung zu.

Nachstehend werden bevorzugte Ausführungsbeispiele des erfindungsgemäßen optoelektronischen auf Optodenbasis beruhenden Gassensors anhand der Zeichnung näher beschrieben.

### Zeichnung

Fig. 1 zeigt eine Layoutansicht eines ersten Ausführungsbeispiels eines optoelektronischen Gassensors auf Optodenbasis.
Fig. 2 zeigt schematisch einen zentralen Querschnitt durch den in Fig. 1 dargestellten Gassensorchip.
Fig. 3 zeigt schematisch eine Layoutansicht eines elektronischen Bauteils, das sich zur Herstellung eines optoelektronischen Gassensors auf Optodenbasis eignet.
Fig. 4 zeigt schematisch einen Querschnitt durch den im Layout in Fig. 3 dargestellten Chip;
Fig 5 zeigt schematisch einen unter Verwendung des elektronischen Bauteils gemäß den Figuren 3 und 4 hergestellten optoelektronischen Gassensorchip mit einem ihn umgebenden Gehäuse; und
die Figuren 6 und 7 den bereits beschriebenen bekannten optoelektronischen Gassensorchip sowie einen damit hergestellten bekannten Gasmeßfühler.

### Ausführungsbeispiele

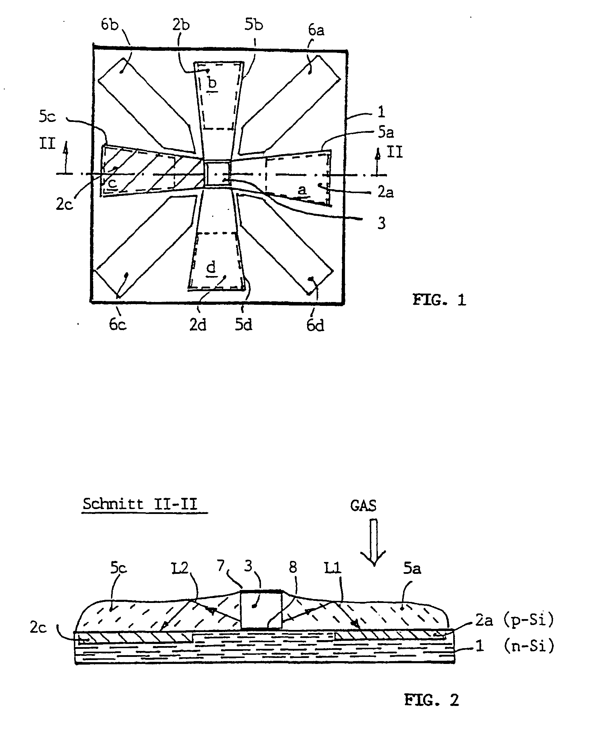

Die in Fig. 1 schematisch dargestellte Layoutansicht eines ersten Ausführungsbeispiels eines optoelektronischen Gassensors auf Optodenbasis enthält vier gleichgroße Transmissionszweige a, b, c und d. Einer der Transmissionszweige, in diesem Beispiel der Transmissionszweig c, ist, wie durch eine Schrägschraffierung angedeutet, als Referenzstrecke ausgebildet. Die Referenzstrecke, drei Optodenstrecken, jeweils bestehend aus Optodenmaterial 5a-5d, und einem darunter (gestrichelt gezeichneten) liegenden lichtempfindlichen Bereich 2a-2d einer Photodiode liegen sternförmig um eine zentrale LED 3 auf einem gemeinsamen Substrat 1. Die einzelnen Transmissionszweige a-d sind durch Barrieren 6a-6d getrennt, die in den Zwischenräumen zwischen den Optodenstrecken liegen.

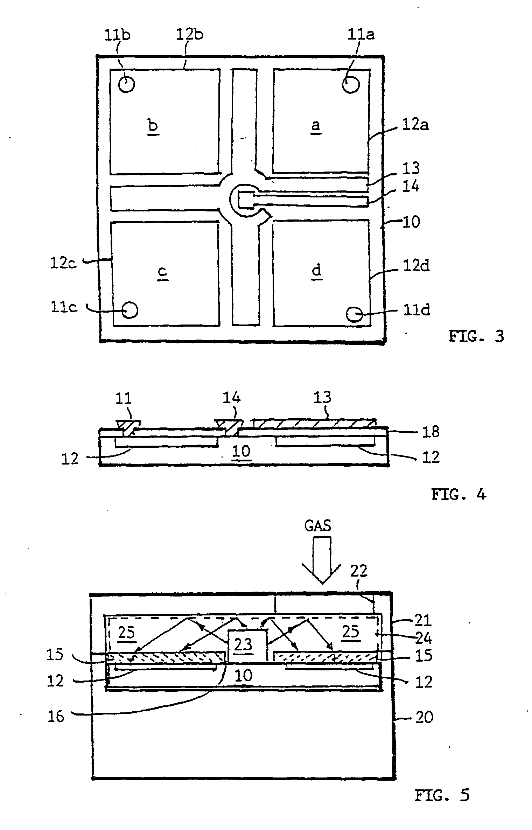

Die in Fig. 2 gezeigte längs der Schnittlinie II-II gesehene Schnittansicht des in Fig. 1 dargestellten optoelektronischen Gassensors auf Optodenbasis zeigt die Integration der lichtempfindlichen Bereiche (es sind nur die Bereiche 2a und 2c zu erkennen) aus p-Si in dem aus n-Si bestehenden Substrat 1. Die zentrale LED 3 ist an ihrer Oberseite und Unterseite jeweils mit einer Spiegelschicht 7, 8, z.B. aus Gold verspiegelt, so daß die von ihr ausgesendeten Lichtstrahlen vornehmlich in lateraler Richtung ausgestrahlt werden, d.h. in das Optodenmaterial der Optodenstrecken 5a und 5c hinein. Dort werden Sie, wie durch zwei beispielhafte Strahlengänge L1 und L2 dargestellt ist, an der Grenzfläche des Optodenmaterials zur Luft totalreflektiert und dadurch auf die lichtempfindlichen Bereiche 2a und 2c der Photodioden geleitet.

Wie in Fig. 2 erkenntlich, ist das Optodenmaterial etwa bis zur Höhe der zentralen LED 3 aufgebracht, die an die LED beiderseitig anschließenden Bereiche des Optodenmaterials bzw. der die Referenzstrecke bedeckenden Schicht 5c sind leicht kurvenförmig abfallend gestaltet, und die äußeren Abschnitte der Optodenstrecken bzw. der Referenzstrecke sind abgerundet, um so die Totalreflexion der in den Optodenstrecken bzw. der Referenzstrecke eingestrahlten Lichtstrahlen L1, L2 zu verbessern. Auf diese Weise gelangt ein großer Anteil des von der LED in die Optodenstrecken und die Referenzstrecke eingekoppelten Lichts zu den lichtempfindlichen Bereichen 2a-2d der Photodioden.

Zu erwähnen ist noch, daß die in Fig. 2 nicht dargestellten Barrieren 6a-6d eine Höhe etwa bis zur Höhe der LED 3 haben, so daß sich die einzelnen Transmissionszweige gegenseitig optisch nicht beeinflussen. Durch zur Umgebungsatmosphäre offene Fenster in einem in Fig. 1 und Fig. 3 nicht dargestellten Gehäuse kann zu messendes Gas die Optodenstrecken a, b, d bespülen (siehe Pfeil in Fig. 2).

Bei der Herstellung eines den optoelektronischen Gassensor auf Optodenbasis gem. den Figuren 1 und 2 realisierenden Prototypen diente ein Si-Chip, z.B. die Basisstruktur der Photodiode BPW 34 mit einer Fläche von 2x2 mm² und einer Dicke von 250 µm als Trägerchip, der jedoch nicht ganzflächig lichtempfindlich ausgeführt wurde sondern nur selektiv an den definierten Stellen 2a-2d lichtempfindliche Bereiche aus p-Si aufwies (vgl. Fig. 1).

Auf der Trägerchip-Oberseite wurde mittig eine chipförmige LED 3 als Lichtsender aufgeklebt. Die LED wies an ihrer Ober- und Unterseite die durch Goldschichten hergestellten Spiegelschichten 7, 8 auf (vgl. Fig. 2). Auf diese Weise konnte das sonst mit kugelförmiger Charakteristik abgestrahlte Licht von der LED vorzüglich in lateraler Richtung austreten. Damit erhielt man eine entsprechend höhere Intensität. Die als Meßstrecken ausgebildeten Optodenschichten 5a, 5b, 5d wurden aus einem gassensitiven Polymer, d.h. einem Polymer-Material, dem eine Indikatorsubstanz zugegeben wird, beschichtet. Die Referenzstrecke wurde bevorzugt mit einem Optodenträgermaterial, d.h. einem Polymermaterial beschichtet, dem keine indikatorsubstanz zugegeben wurde. Auf diese Weise geriet der Aufbau weitestgehend symmetrisch, so daß neben Einflüssen der Elektronik auch Änderungen, die das Trägermaterial der Optoden betreffen, wie Alterung und Verschmutzung, kompensiert werden konnten. Das Licht (vgl. L1, L2 in Fig. 2) gelangte in den Optodenschichten bzw. der Referenzschicht von der LED über Totalreflexion zur Photodiode. Stellen des Si-Chips, die beschichtet aber nicht lichtempfindlich sind, wurden vor dem Beschichten, z.B. durch Goldschichten verspiegelt. Schließlich wurden die Barrieren 6a-6d bevorzugt durch ein Siebdruckverfahren aufgebracht, welches gewährleistet, daß die für die effektive Trennung erforderliche Barrierenhöhe erreicht wird.

Die Dicke des Si-Chips betrug, wie schon erwähnt, 250 µm. Die LED hatte eine Breite von 300 µm und eine Höhe von 300 µm. Die Barrierenhöhe war betrug ebenfalls 300 µm.

Für den praktischen Einsatz wurde das Chip in einem Gehäuse, vorzugsweise SMD, montiert und durch einen Deckel geschützt, der über den Stellen, die mit gassensitiven Optodenmaterialien beschichtet sind, d.h. über den Optodenstrecken 5a, 5b und 5d, Öffnungen aufwies, so daß Gas eindringen konnte.

Durch die Integration aller Funktionseinheiten des optoelektronischen Gassensors, wie der elektronischen Bauteile und der Optoden auf einem Si-Chip, hatte der als Prototyp hergestellte Gassensorchip äußerst geringe geometrische Abmessungen.

Aufgrund des geringen Abstandes zwischen der LED und den optischen Empfängern, d.h. den lichtempfindlichen Bereichen der Photodioden, konnten die Optodenstrecken mit dem gassensitiven Polymer die Aufgabe der sonst erforderlichen passiven Optik mit übernehmen. Dies betrifft das Führen des Lichts von der als Lichtsender dienenden LED 3 zur Optode und von der Optode zur Photodiode. Dabei bleibt gewährleistet, daß das Gas der umgebenden Atmosphäre auf eine große Oberfläche der Optode einwirken kann.

Durch den geringen Abstand zwischen der LED und den lichtempfindlichen Bereichen der Photodiode erreichte man eine hohe Effektivität bei der Überkoppelung des Lichts zwischen diesen Bauteilen. Dadurch ergab sich ein geringer Leistungsbedarf.

Die durch die Verspiegelung der Ober- und Unterseite der LED erreichte angepaßte Abstrahlcharakteristik der LED in lateraler Richtung verstärkte diesen Effekt. Durch die direkte Überkopplung des Lichts von der LED in die Optode und von dort in die Photodiode traten äußerst geringe Koppelverluste auf. Dadurch konnten zusätzliche passive optische Bauteile vermieden werden.

Die zwischen den Optodenstrecken und der Referenzstrecke aufgebauten Barrieren gewährleisteten ein geringes Nebensprechen, das sonst durch Streulicht, das aus den Optoden austreten und in die benachbarten Optodenstrecken einkoppeln könnte, verursacht würde. Die gleichartige und zentralsymmetrische Realisierung der Meßstrecken und der Referenzstrecke ergaben somit einen optoelektronischen Gassensor auf Optodenbasis, bei dem, neben den Einflüssen der Elektronik, auch die Änderungen, die das Trägermaterial der Optoden betreffen, wie Alterung und Verschmutzung, kompensiert werden konnten.

Selbstverständlich ist die in den Figuren 1 und 2 dargestellte quadratische Ausführung mit drei Optodenmeßstrecken und einer Referenzstrecke nur beispielhaft zu sehen. Es lassen sich mit gleichartigen Verfahrensschritten und Merkmalen auch fünf-, sechs-, sieben- oder achteckige oder auch runde Chipformen realisieren, die auch weniger oder mehr als drei Optodenmeßstrecken beinhalten können.

Die Figuren 3 bis 5 stellen eine Ausführungsform eines elektronischen Bauteils dar, welches sich auch für eine kundenspezifische Ausführung eines optoelektronischen Gassensors auf der Basis von Optoden gemäß der Erfindung eignet.

Die in Fig. 3 gezeigte Layout-Ansicht zeigt, daß wie bei dem oben, bezogen auf die Figuren 1 und 2, beschriebenen ersten Ausführungsbeispiel auf einem Substrat 10, z.B. aus n-Si, vier lichtempfindliche Bereiche 12a-12d integriert sind, die zusammen mit einem in Fig. 3 und 4 nicht gezeigten Optodenmaterial bzw. einer Referenzschicht, die später vom Kunden aufbringbar sind, vier Transmissionszweige a, b, c und d bilden.

Die lichtempfindlichen Bereiche 12a-12d sind auf dem quadratischen Siliziumsubstrat 10 in Form quadratischer lichtempfindlicher Elemente aus p-Si so integriert, daß sie einen bestimmten Abstand einhalten. In den Zwischenräumen zwischen den lichtempfindlichen Elementen 12a-12d sind Metallisierungsstreifen 13 und 14 angeordnet, die der elektrischen Verbindung mit einer nachträglich aufzugebenden als Lichtsender dienenden LED dienen. Kontaktpads 11a-11d sind zur Kontaktierung der lichtempfindlichen Elemente 12a-12d vorgesehen.

Wie die in Fig. 4 dargestellte Schnittansicht zeigt, sind die Kontaktpads 11 und das zentrale Ende des Metallisierungsstreifens 14 durch Kontaktierungsöffnungen durch eine das Substrat 10 und die lichtempfindlichen Elemente 12 bedeckende Isolationsschicht 18, z.B. aus SiO₂, jeweils bis zu den lichtempfindlichen Elementen 12 aus p-Si bzw zum Substrat 10 aus n-Si durchkontaktiert.

Das in den Figuren 3 und 4 dargestellte elektronische Bauteil hat eine Chipkantenlänge von etwa 250 µm, und die Fläche der einzelnen lichtempfindlichen Bereiche betrug etwa 0,8-1 mm². Die Metallisierung besteht aus Aluminium oder Gold.

Besonders geeignet ist die Verwendung des in den Figuren 3 und 4 dargestellten elektronischen Bauteils zur Herstellung eines optoelektronischen Gassensor auf der Basis von Optoden.

Dies wird nun anhand der Fig. 5 erläutert.

Der Chip wird in einem Gehäuse 20 (vorzugsweise SMD) montiert und durch einen Deckel 21 geschützt. Der Deckel 21 weist über den Stellen, die mit gassensitiven Materialien zu beschichten sind, Öffnungen 22 auf, so daß Gas eindringen kann (siehe Pfeil). Für eine gute Verarbeitbarkeit kann der Gehäusedeckel 21 vor dem Aufbringen der gassensitiven Materialein befestigt und das in Fig. 3 und 4 gezeigte Bauteil unbeschichtet in eine entsprechende elektronische Schaltung auf einer Leiterplatte eingelötet werden. Da bis hierhin der Chip noch nicht mit den gassensitiven Materialien beschichtet wurde, sind diese vor dem Lötvorgang geschützt. Die Beschichtung erfolgt im Falle einer kundenspezifischen Realisierung beim Kunden durch die Öffnungen 22 im Gehäusedeckel 21, durch die beim späteren Einsatz das Gas eintritt. Diese können beim Lötvorgang z.B. mit einer Klebefolie verschlossen werden, um das Eindringen von Flußmitteln zu verhindern.

Fig. 5 zeigt den fertiggestellten, optoelektronischen Gassensorchip auf der Basis von Optoden. Dabei wurden zur Vereinfachung der Darstellung alle Metallisierungsabschnitte weggelassen.

Die in einer Ebene liegenden lichtempfindlichen Elemente 12 sind mit einer wesentlich dünneren Schicht 15 des Optodenmaterials bzw. des Referenzstreckenmaterials bedeckt, als dies bei dem in den Figuren 1 und 2 gezeigten Ausführungsbeispiel der Fall war. Ein zentraler Lichtsender 23 ist durch einen Ringspalt 16 gegenüber den Abschnitten des Optodenmaterials beabstandet, und ragt weit über die obere Oberfläche des Optodenmaterials 15 hinaus. Die Innenwand des Gehäusedeckels 21 weist eine Verspiegelung 24 auf. Auf diese Weise wird das von der LED 23 emittierte Licht zunächst in die Luft, d.h. in die Gasatmosphäre abgestrahlt, die sich in der Kammer 25 oberhalb der Optodenschichten 15 befindet und wird dann direkt oder nachdem es an einer der Innenwand oder einer Verspiegelung der Innenwand 24 des Gehäusedeckels 21 reflektiert wurde, durch das Optodenmaterial 15 in die jeweiligen lichtempfindlichen Elemente 12 geführt.

Zur Veranschaulichung sind in Fig. 5 einige an der Spiegelschicht 24 reflektierte Lichtstrahlen eingezeichnet. Dabei fällt auf, daß die Oberseite der LED 23 bei dem Ausführungsbeispiel gem. Fig. 5 nicht verspiegelt ist. Die Höhe der in Fig. 5 gezeigten zentralen LED 23 beträgt, wie bei der in den Figuren 1 und 2 dargestellten Ausführungsform, etwa 300 µm, während die Schichtdicke der Optodenschichten 15 bzw. der Referenzschicht in Fig. 5 5-10 µm beträgt, also sehr viel dünner ist, als die Optodenschicht der in Fig. 1 und 2 gezeigten Ausführungsform, da die Optoden bzw. die Referenzschicht nicht vorrangig als Lichtleiter dienen.

Den Barrieren kommt bei dem in Fig. 5 gezeigten optoelektronischen Gassensor nur eine untergeordnete Bedeutung zu, weshalb sie auch nicht dargestellt sind.

Das in den Figuren 3 und 4 dargestellte und in Fig. 5 eingesetzte Photodioden-Array läßt sich mit herkömmlichen Dünnschichtprozessen mit Standardprozeßmaßen in einer Größe von 2x2 mm und kleiner herstellen. Weitere Bauformen, wie z.B. ein Fünfeck, ein Sechseck, ein Siebeneck oder Achteck oder auch eine kreisrunde Form lassen sich wie bei der in den Figuren 1 und 2 gezeigten Ausführungsform ebenfalls realisieren.

Die LED 23 kann mit einem durch Siebdruck aufgebrachten Silberleitkleber. aufgeklebt werden. Durch einen gleichartigen Siebdruckprozeß lassen sich auch die in Fig. 5 nicht gezeigten Barrieren aus Silberleitkleber in einer Höhe von etwa 50 µm aufdrucken.

Auch für das in Fig. 5 gezeigte Ausführungsbeispiel eines auf Optodenbasis beruhenden optoelektronischen Gassensors gelten die vorteilhaften Eigenschaften, daß der Sensor aufgrund der Integration aller seiner Funktionseinheiten auf einem Si-Chip äußerst geringe geometrische Abmessungen aufweist, daß, aufgrund des geringen Abstandes zwischen der LED 23 und den Photodioden 12, die aus dem gassensitiven Polymer bestehende Optode eine passive Optik (abgesehen von der möglichen Verspiegelung der innenwand des Gehäusedeckels 21) entbehrlich macht.

Es ist auch hier gewährleistet, daß das Gas, das durch die Fenster 22 in den Innenraum 25 einströmt, auf eine große Optodenoberfläche einwirken kann. Auch hier ist durch den geringen Abstand zwischen der LED 23 und den Photodioden 12 eine hohe Effektivität bei Überkoppeln des Lichts zwischen den Bauteilen erreicht, was einen geringen Leistungsbedarf bewirkt.

## Patentansprüche

1. Optoelektronischer Gassensor auf der Basis von Optoden, bei dem in oder auf einem Halbleitersubstrat (1) mehrere voneinander getrennte lichtempfindliche Elemente (2) und ein mittig dazwischen liegender Lichtsender (3) integriert sind,
wobei
die lichtempfindlichen Elemente (2) im Substrat (1) in einer Ebene liegen und zusammen mit einem Licht in lateraler Richtung aussendenden seitlichen Emissionsbereich (4) des Lichtsenders (3) von Abschnitten des Optodenmaterials bedeckt sind, dessen Dicke und Brechungsindex so gewählt sind, daß das aus dem Emissionsbereich (4) lateral austretende Licht durch Totalreflexion in dem Optodenmaterial in jedem Transmissionszweig (a-d) zu den lichtempfindlichen Elementen (2) geführt wird.

2. Optoelektronischer Gassensor auf der Basis von Optoden, bei dem in oder auf einem Halbleitersubstrat (10) mehrere voneinander getrennte lichtempfindliche Elemente (12) und ein mittig dazwischen liegender Lichtsender (13) integriert sind,
wobei
die lichtempfindlichen Elementen (12) im Substrat in einer Ebene liegen und jeweils von einem Abschnitt des Optodenmaterials (15) bedeckt sind, der Lichtsender (23) durch einen Ringspalt (16) gegenüber den Abschnitten des Optodenmaterials beabstandet ist und die Dicke des Optodenmaterials (15) sehr viel geringer als die Höhe des Lichtsenders ist, so daß das vom Lichtsender (23) emittierte Licht in die Luft abgestrahlt und dann direkt oder, nachdem es an den innenwänden eines den Gassensorchip umgebenden Gehäuses (20) reflektiert wurde, durch das Optodenmaterial jeweils in die lichtempfindlichen Elemente (12) eintritt.

3. Optoelektronischer Gassensor nach Anspruch 1 oder 2, **dadurch gekennzeichnet, daß** eines der lichtempfindlichen Elemente (2; 12) und die es bedeckende Schicht eine Referenzstrecke bilden.

4. Optoelektronischer Gassensor nach Anspruch 1 oder 2, **dadurch gekennzeichnet, daß** das Optodenmaterial aus einem gassensitiven Polymer-Trägermaterial besteht, dem eine Indikatorsubstanz zugegeben ist.

5. Optoelektronischer Gassensor nach Anspruch 1 oder 2, **dadurch gekennzeichnet, daß** die die Referenzstrecke bedeckende Schicht aus Polymer-Trägermaterial besteht, dem keine Indikatorsubstanz zugegeben ist.

6. Optoelektronischer Gassensor nach einem der vorangehenden Ansprüche, **dadurch gekennzeichnet, daß** die lichtempfindlichen Elemente (2; 12) mit den sie bedeckenden Abschnitten (5, 15) des Optodenmaterials sektorartig zentralsymmetrisch um den Lichtsender (3) angeordnet sind.

7. Optoelektronischer Gassensor nach Anspruch 5, **dadurch gekennzeichnet, daß** die lichtempfindlichen Elemente (2; 12) und die sie bedeckenden Abschnitte (5, 15) des Optodenmaterials vier Transmissionszweige (a-d) einschließlich, dreier Sensorstrecken (a, b, d) und der einen Referenzstrecke (c) bilden.

8. Optoelektronischer Gassensor nach einem der Ansprüche 1 oder 3-7, **dadurch gekennzeichnet, daß** die einzelnen Transmissionszweige (a-d) durch in Zwischenräumen zwischen den lichtempfindlichen Elementen (2) liegende Barrieren (6) getrennt sind, deren Höhe so gewählt ist, daß sie das aus dem jeweils die lichtempfindlichen Elementen (2) bedeckenden Optodenmaterial austretende Streulicht gegenüber dem benachbarten lichtempfindlichen Element (2) abschirmen.

9. Optoelektronischer Gassensor nach Anspruch 8, **dadurch gekennzeichnet, daß** Stellen des Halbleitersubstrats (1), die nicht lichtempfindlich sind, und die Seitenflächen der Barrieren mit einer Spiegelschicht bedeckt sind.

10. Optoelektronischer Gassensor nach einem der vorangehenden Ansprüche, **dadurch gekennzeichnet, daß** das Substrat (1) ein n-Siliziumsubstrat ist, und die lichtempfindlichen Elemente aus p-Silizium bestehen.

11. Optoelektronischer Gassensor nach einem der vorangehenden Ansprüche, **dadurch gekennzeichnet, daß** die lichtempfindlichen Elemente (2; 12) Photodioden bilden und der Lichtsender (3; 23) eine LED ist.

12. Optoelektronischer Gassensor nach einem der vorangehenden Ansprüche, **dadurch gekennzeichnet, daß** ein den Chip des Gassensors schützender Deckel Öffnungen über den gassensitiven Transmissionszweigen so aufweist, daß dort das Optodenmaterial gegenüber dem zu messenden Gas freiliegt.

13. Optoelektronischer Gassensor nach einem der Ansprüche 1 oder 3-12, **dadurch gekennzeichnet, daß** die Dicke des Optodenmaterials über den lichtempfindlichen Elementen im Bereich 200 µm bis 300 µm, bevorzugt 220 µm bis 260 µm, liegt.

14. Optoelektronischer Gassensor nach einem der Ansprüche 2-7 oder 10-12, **dadurch gekennzeichnet, daß** die Dicke des Optodenmaterials im Bereich 5 µm bis 20 µm, bevorzugt 5 µm bis 10 µm, liegt, und die Höhe des Lichtsenders etwa 300 µm beträgt.

15. Elektronisches Bauteil zur Herstellung eines optoelektronischen Gassensors nach einem oder mehreren der vorangehenden Ansprüche, wobei in oder auf einem Halbleitersubstrat mehrere voneinander getrennte lichtempfindliche Elemente sektorartig zentralsymmetrisch unter Einhaltung eines bestimmten Abstandes integriert sind, daß eine dünne dielektrische Isolationsschicht über den gesamten lichtempfindlichen Halbleiterbereichen liegt, daß Kontaktöffnungen an definierten peripheren Stellen der lichtempfindlichen Halbleiterelemente mit Kontaktierungen zu den lichtempfindlichen Halbleiterelementen versehen sind, und daß in den Abstandsbereichen zwischen den lichtempfindlichen Elementen Metallisierungsstreifen zu einem zentralen Anschlußpad zum Anschluß einer als Lichtsender dienenden LED geführt sind.

16. Elektronisches Bauteil nach Anspruch 15, **dadurch gekennzeichnet, daß** vier Photodioden, die gleich groß sein können, mit einer durch das Substrat gebildeten gemeinsamen Kathode und einer Fläche der einzelnen lichtempfindlichen Bereiche von jeweils 0,3 bis 0,8 mm² in einem Chip mit einer Kantenlänge im Bereich von etwa 200 µm bis 300 µm liegen, daß die Metallisierung aus Aluminium oder Gold besteht, und daß die gesamte Chiphöhe etwa 200 µm bis 300 µm ist.

## Claims

1. Optoelectronic gas sensor based on optodes, in which a number of mutually separated photosensitive elements (2) and an optotransmitter (3) situated centrally therebetween are integrated in or on a semiconductor substrate (1), in which the photosensitive elements (2) in the substrate (1) lie in one plane and, together with a lateral emission area (4) of the optotransmitter (3) emitting light in a lateral direction, are covered by sections of the optode material whose thickness and refractive index are selected such that the light emerging laterally from the emission area (4) is guided to the photosensitive elements (2) by total reflection in the optcde material in each transmission branch (a-d).

2. Optoelectronic gas sensor based on optodes, in which a number of mutually separated photosensitive elements (12) and an optotransmitter (13) situated centrally therebetween are integrated in or on a semiconductor substrate (10), in which the photosensitive elements (12) in the substrate lie in one plane and are respectively covered by a section of the optode material (15), the optotransmitter (23) being distanced from the sections of the optode material by an annular gap (16), and the thickness of the optode material (15) being very much less than the height of the optotransmitter such that the light emitted by the optotransmitter (23) is radiated into the air and then respectively enters the photosensitive elements (12) through the optode material directly or after it has been reflected at the inner walls of a housing (20) surrounding the gas sensor chip.

3. Optoelectronic gas sensor according to Claim 1 or 2, **characterized in that** one of the photosensitive elements (2; 12) and the layer covering it form a reference path.

4. Optoelectronic gas sensor according to Claim 1 or 2, **characterized in that** the optode material consists of a gas-sensitive polymer backing material to which an indicator substance is added.

5. Optoelectronic gas sensor according to Claim 1 or 2, **characterized in that** the layer covering the reference path consists of a polymer backing material to which no indicator substance is added.

6. Optoelectronic gas sensor according to one of the preceding claims, **characterized in that**, together with the sections (5, 15) of the optode material covering them, the photosensitive elements (2; 12) are arranged in sectors in a centrally symmetrical fashion around the optotransmitter (3).

7. Optoelectronic gas sensor according to Claim 5, **characterized in that** the photosensitive elements (2; 12) and the sections (5, 15) of the optode material which cover them form four transmission branches (a-d) including three sensor paths (a, b, d) and the one reference path (c).

8. Optoelectronic gas sensor according to one of Claims 1 or 3-7, **characterized in that** the individual transmission branches (a-d) are separated by barriers (6) lying in interspaces between the photosensitive elements (2) and whose height is selected such that they shield the scattered light emerging from the optode material respectively covering the photosensitive elements (2) from the neighbouring photosensitive element (2).

9. Optoelectronic gas sensor according to Claim 8, **characterized in that** locations of the semiconductor substrate (1) which are not photosensitive, and the lateral surfaces of the barriers are covered with a reflecting layer.

10. Optoelectronic gas sensor according to one of the preceding claims, **characterized in that** the substrate (1) is an n-silicon substrate, and the photosensitive elements consist of p-silicon.

11. Optoelectronic gas sensor according to one of the preceding claims, **characterized in that** the photosensitive elements (2; 12) form photodiodes, and the optotransmitter (3; 23) is an LED.

12. Optoelectronic gas sensor according to one of the preceding claims, **characterized in that** a cover protecting the chip of the gas sensor has openings above the gas-sensitive transmission branches such that the optode material is exposed there to the gas to be measured.

13. Optoelectronic gas sensor according to one of Claims 1 or 3-12, **characterized in that** the thickness of the optode material over the photosensitive elements is in the range of 200 µm to 300µm, preferably 220 µm to 260 µm.

14. Optoelectronic gas sensor according to one of Claims 2-7 or 10-12, **characterized in that** the thickness of the optode material is in the range of 5 µm to 20 µm, preferably 5 µm to 10 µm, and the height of the optotransmitter is approximately 300 µm.

15. Electronic component for producing an optoelectronic gas sensor according to one or more of the preceding claims, in which a number of mutually separated photosensitive elements are integrated in or on a semiconductor substrate in sectors in a centrally symmetrical fashion while maintaining a specific spacing, in which a thin dielectric insulating layer lies over the entire photosensitive semiconductor areas, in which contact openings are provided at defined peripheral locations of the photosensitive semiconductor elements with contacts for the photosensitive semiconductor elements, and in which metallization strips are guided in the spacing areas between the photosensitive elements to a central connecting pad for connecting an LED serving as optotransmitter.

16. Electronic component according to Claim 15, **characterized in that**, together with a common cathode, formed by the substrate, and an area of the individual photosensitive regions of in each case 0.3 to 0.8 mm², four photodiodes, which can be of the same size, lie in a chip with an edge length in the range from approximately 200 µm to 300 µm, **in that** the metallization consists of aluminium or gold, and **in that** the total chip height is approximately 200 µm to 300 µm.

## Revendications

1. Détecteur de gaz optoélectronique à base d'optodes, intégrant plusieurs éléments photosensibles (2) séparés les uns des autres et un émetteur de lumière (3) placé entre ceux-ci, dans ou sur un substrat semi-conducteur (1),
dans lequel
les éléments photosensibles (2) présents dans le substrat (1) sont dans un même plan et recouverts, conjointement avec une zone d'émission latérale (4) de l'émetteur de lumière (3) émettant de la lumière en direction latérale, par des sections du matériau à optodes, dont l'épaisseur et l'indice de réfraction sont choisis pour que la lumière sortant latéralement de la zone d'émission (4) soit acheminée par réflexion totale dans le matériau à optodes, dans chaque branche de transmission (a-d) menant vers les éléments photosensibles (2).

2. Détecteur de gaz optoélectronique à base d'optodes, intégrant plusieurs éléments photosensibles (12) séparés les uns des autres et un émetteur de lumière (13) placé entre ceux-ci dans ou sur un substrat semi-conducteur (10),
dans lequel
les éléments photosensibles (12) présents dans le substrat sont dans un même plan et respectivement recouverts par une section du matériau à optodes (15), l'émetteur de lumière (23) étant situé à distance par rapport aux sections du matériau à optodes par le biais d'une fente annulaire (16) et l'épaisseur du matériau à optodes (15) étant considérablement plus faible que la hauteur de l'émetteur de lumière, de telle sorte que la lumière émise par l'émetteur de lumière (23) est diffusée dans l'air puis entre, directement ou après avoir été réfléchie au niveau des parois intérieures d'un boîtier (20) entourant la puce du détecteur de gaz, dans les éléments photosensibles (12) respectifs par le biais du matériau à optodes.

3. Détecteur de gaz optoélectronique selon la revendication 1 ou 2,
**caractérisé en ce que**
l'un des éléments photosensibles (2 ; 12) et la couche qui le recouvre forment une trajectoire de référence.

4. Détecteur de gaz optoélectronique selon la revendication 1 ou 2,
**caractérisé en ce que**
le matériau à optodes se compose d'un support en polymère sensible aux gaz, auquel est ajouté un indicateur.

5. Détecteur de gaz optoélectronique selon la revendication 1 ou 2,
**caractérisé en ce que**
la couche recouvrant la trajectoire de référence se compose d'un support en polymère, auquel aucun indicateur n'est ajouté.

6. Détecteur de gaz optoélectronique selon l'une des revendications précédentes, **caractérisé en ce que**
les éléments photosensibles (2 ; 12) sont répartis en secteurs, avec les sections (5, 15) du matériau à optodes qui les recouvrent, selon une symétrie centrale par rapport à l'émetteur de lumière (3).

7. Détecteur de gaz optoélectronique selon la revendication 5,
**caractérisé en ce que**
les éléments photosensibles (2 ; 12) et les sections (5, 15) du matériau à optodes qui les recouvrent forment quatre branches de transmission (ad) comprenant trois trajectoires de détection (a, b, d) et la trajectoire de référence (c).

8. Détecteur de gaz optoélectronique selon l'une des revendications 1 ou 3 à 7,
**caractérisé en ce que**
les branches de transmission individuelles (a-d) sont séparées par des barrières (6) présentes dans des espaces intermédiaires entre les éléments photosensibles (2), et dont la hauteur est telle qu'elles isolent la lumière diffusée sortant du matériau à optodes recouvrant respectivement les éléments photosensibles (2) vis-à-vis de l'élément photosensible (2) voisin.

9. Détecteur de gaz optoélectronique selon la revendication 8,
**caractérisé en ce que**
des points du substrat semi-conducteur (1) non photosensibles, ainsi que les surfaces latérales des barrières, sont recouverts par une couche réfléchissante.

10. Détecteur de gaz optoélectronique selon l'une des revendications précédentes,
**caractérisé en ce que**
le substrat (1) est un substrat en silicium, et les éléments photosensibles se composent de silicium p.

11. Détecteur de gaz optoélectronique selon l'une des revendications précédentes,
**caractérisé en ce que**
les éléments photosensibles (2 ; 12) forment des photodiodes et l'émetteur de lumière (3 ; 23) est une DEL.

12. Détecteur de gaz optoélectronique selon l'une des revendications précédentes,
**caractérisé en ce qu'**
un couvercle protégeant la puce du détecteur de gaz présente des ouvertures au-dessus des branches de transmission sensibles aux gaz, de telle sorte qu'à cet endroit, le matériau à optodes est exposé au gaz à mesurer.

13. Détecteur de gaz optoélectronique selon l'une des revendications 1 ou 3 à 12,
**caractérisé en ce que**
l'épaisseur du matériau à optodes au-dessus des éléments photosensibles est comprise entre 200 µm et 300 µm, de préférence entre 220 µm et 260 µm.

14. Détecteur de gaz optoélectronique selon l'une des revendications 2 à 7 ou 10 à 12,
**caractérisé en ce que**
l'épaisseur du matériau à optodes est comprise entre 5 µm et 20 µm, de préférence entre 5 µm et 10 µm, et la hauteur de l'émetteur de lumière est environ égale à 300 µm.

15. Composant électronique pour la fabrication d'un détecteur de gaz optoélectronique selon l'une ou plusieurs des revendications précédentes, intégrant dans ou sur un substrat semi-conducteur, plusieurs éléments photosensibles séparés les uns des autres en secteurs selon une symétrique centrale, en respectant une distance donnée,
dans lequel
une mince couche isolante diélectrique est située au-dessus de la totalité des zones semi-conductrices photosensibles, avec aux endroits périphériques définis des éléments semi-conducteurs, des ouvertures de contact pour des contacts vers les éléments semi-conducteurs photosensibles, et des bandes de métallisation menant à une pastille de raccordement centrale, permettent le raccordement à une DEL servant d'émetteur de lumière, en étant introduites dans les zones intermédiaires entre les éléments photosensibles.

16. Composant électronique selon la revendication 15,
**caractérisé en ce que**
quatre photodiodes, qui peuvent être de taille identique, comportant une cathode commune formée par le substrat et une surface des zones individuelles photosensibles de respectivement 0,3 à 0,8 mm², se trouvent dans une puce ayant une longueur d'arête comprise entre environ 200 µm et 300 µm, et la métallisation se compose d'aluminium ou d'or, la hauteur totale de la puce étant comprise entre environ 200 µm et 300 µm.
